(19) Europäisches Patentamt
European Patent Office
Office européen des brevets

(11) **EP 4 350 241 A1**

(12) **EUROPEAN PATENT APPLICATION**
published in accordance with Art. 153(4) EPC

(43) Date of publication:
**10.04.2024  Bulletin 2024/15**

(51) International Patent Classification (IPC):
**F24F 11/86** (2018.01)       **F24F 11/871** (2018.01)
**F24F 140/00** (2018.01)

(21) Application number: **21942904.0**

(22) Date of filing: **24.05.2021**

(52) Cooperative Patent Classification (CPC):
**F24F 11/86; F24F 11/871;** F24F 2140/00;
Y02B 30/70

(86) International application number:
**PCT/JP2021/019640**

(87) International publication number:
**WO 2022/249247 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventor: **TANAKA, Chitose**
**Tokyo 100-8310 (JP)**

(74) Representative: **Pfenning, Meinig & Partner mbB
Patent- und Rechtsanwälte
An der Frauenkirche 20
01067 Dresden (DE)**

(54) **AIR CONDITIONER**

(57)     An air conditioner (1) includes: a refrigerant circuit (4) including a compressor (10), an indoor heat exchanger (20), an expansion valve (30), and an outdoor heat exchanger (40), the refrigerant circuit (4) being configured to circulate refrigerant; a blower (45) configured to send air to the outdoor heat exchanger (40); and a controller (100) configured to control at least one actuator that is one of the compressor (10), the expansion valve (30), and the blower (45). One of the indoor heat exchanger (20) and the outdoor heat exchanger (40) is configured to function as a condenser. The controller (100) is configured to calculate a parameter used for controlling the at least one actuator in a state in which a degree of subcooling of refrigerant having passed through the condenser is equal to or greater than a threshold value.

FIG.5

**Description**

TECHNICAL FIELD

The present disclosure relates to an air conditioner.

BACKGROUND ART

In an air conditioner, conventionally, a cooling operation or a heating operation can be implemented by circulation of refrigerant through a refrigerant circuit under the control of an actuator by a controller. In general, the control of the air conditioner is roughly classified into: target value following control for setting the temperature and the pressure correlated with each of the cooling capability and the heating capability to fall within a predetermined range within a predetermined time; and protection control for setting each of the temperature and the pressure to fall within a predetermined guaranteed range.

As such an air conditioner, there is known an air conditioner that controls an actuator with feedback control such as proportional-integral-differential (PID) control or proportional-integral (PI) control. The PID control is a method of controlling the amount of operation of an actuator based on: a deviation between a value that changes in response to the change made to an input value (hereinafter also referred to as an "amount of operation") of the actuator and a target value; an integral of the deviation; and a differential of the deviation. In the PI control, the differential of the deviation is not taken into consideration, but the amount of operation of the actuator is controlled based on the deviation and the integral of the deviation.

The air conditioner has an auto-tuning function for setting parameters used for PID control or PI control. Japanese Patent Laying-Open No. 2011-220610 (PTL 1) discloses an air conditioner that controls the number of rotations of a compressor by PID control or PI control. The air conditioner is configured to determine parameters used for controlling the compressor based on the pressure of the refrigerant on the suction side of the compressor, the pressure of the refrigerant on the discharge side of the compressor, and the number of rotations of the compressor.

CITATION LIST

PATENT LITERATURE

PTL 1: Japanese Patent Laying-Open No. 2011-220610

SUMMARY OF INVENTION

TECHNICAL PROBLEM

The transient response of the refrigeration cycle varies depending on the installation environment and the operating conditions of the air conditioner such as an indoor temperature, an outside air temperature, a pipe length, the filling amount of refrigerant, and the number of indoor units, and thus, it is desirable to optimize the parameters in consideration of the above-mentioned state of the air conditioner. In the air conditioner disclosed in Japanese Patent Laying-Open No. 2011-220610, however, no consideration is given to the state of the air conditioner when determining parameters, which makes it difficult to determine optimal parameters.

The present disclosure has been made to solve the above-described problems, and it is an object of the present disclosure to provide an air conditioner that determines an optimal parameter used for controlling an actuator.

SOLUTION TO PROBLEM

An air conditioner according to the present disclosure includes a refrigerant circuit, a blower, and a controller. The refrigerant circuit includes a compressor, an indoor heat exchanger, an expansion valve, and an outdoor heat exchanger, and is configured to circulate refrigerant. The blower is configured to send air to the outdoor heat exchanger. The controller is configured to control at least one actuator that is one of the compressor, the expansion valve, and the blower. One of the indoor heat exchanger and the outdoor heat exchanger is configured to function as a condenser. The controller is configured to calculate a parameter used for controlling the at least one actuator in a state in which a degree of subcooling of refrigerant having passed through the condenser is equal to or greater than a threshold value.

ADVANTAGEOUS EFFECTS OF INVENTION

According to the present disclosure, the air conditioner calculates a parameter used for controlling at least one actuator that is one of the compressor, the expansion valve, and the blower in the state in which the degree of subcooling of the refrigerant having passed through the condenser is equal to or greater than a threshold value, and thereby, can determine an optimal parameter in consideration of the degree of subcooling of the refrigerant having passed through the condenser.

BRIEF DESCRIPTION OF DRAWINGS

Fig. 1 is a diagram showing a configuration of an air conditioner according to a first embodiment.
Fig. 2 is a diagram showing a configuration of the air conditioner according to the first embodiment.
Fig. 3 is a diagram showing changes in amount of operation in a compressor.
Fig. 4 is a diagram showing changes in response gain in the compressor.
Fig. 5 is a flowchart for illustrating a parameter calculation process of a controller.
Fig. 6 is a diagram showing a parameter setting table.

DESCRIPTION OF EMBODIMENTS

Embodiments of the present disclosure will be hereinafter described in detail with reference to the accompanying drawings. While a plurality of embodiments will be described in the following, it has been originally intended to combine the configurations described in the embodiments as appropriate. In the accompanying drawings, the same or corresponding portions are denoted by the same reference characters, and the description thereof will not be repeated.

First Embodiment

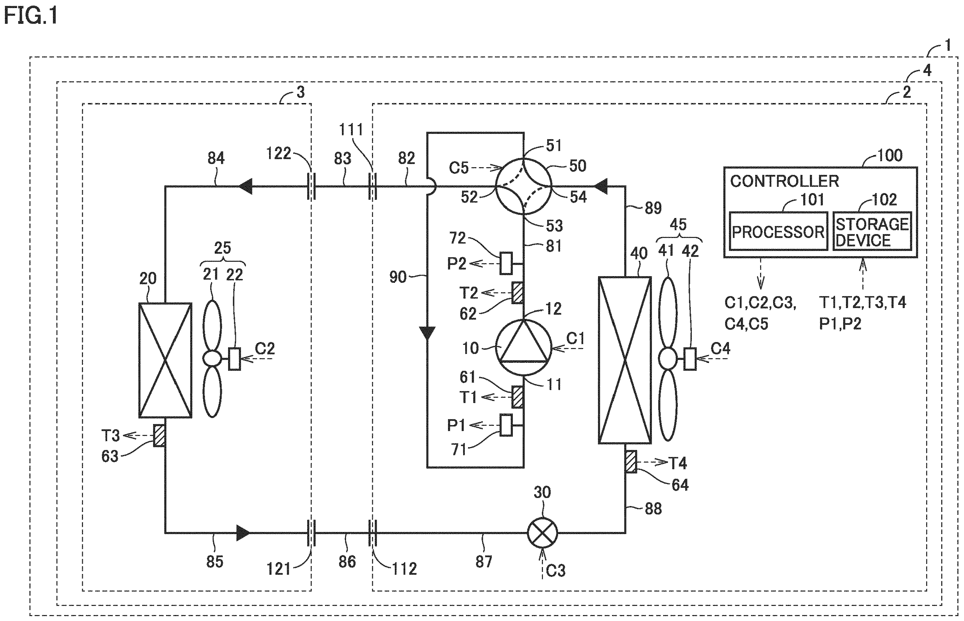

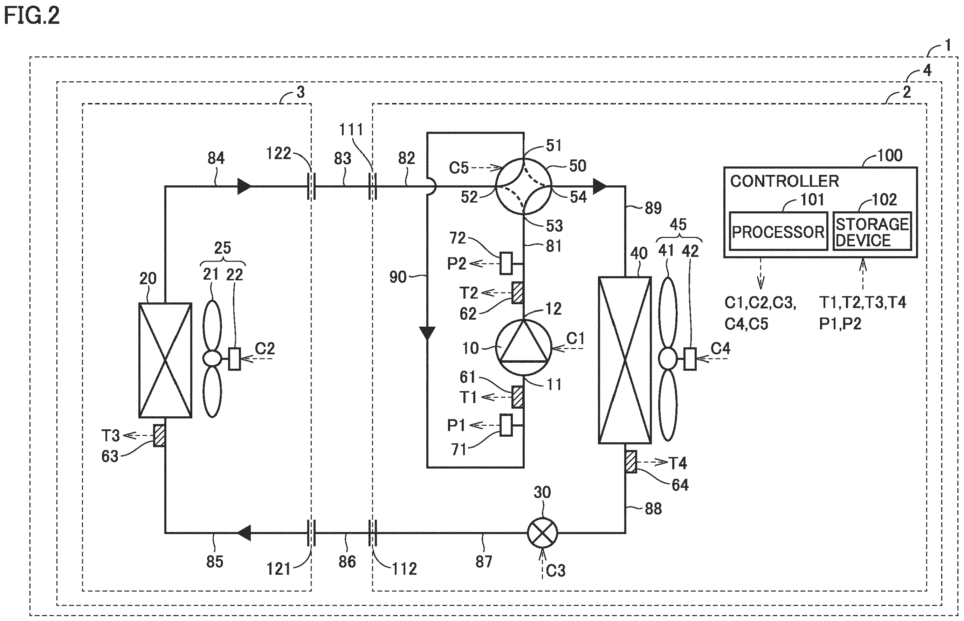

Figs. 1 and 2 are diagrams each showing a configuration of an air conditioner 1 according to the first embodiment. Figs. 1 and 2 each functionally show the connection relation and the arrangement configuration of parts in air conditioner 1, but does not necessarily show the arrangement in a physical space.

As shown in Figs. 1 and 2, air conditioner 1 includes a refrigerant circuit 4 and a controller 100. Refrigerant circuit 4 includes an outdoor unit 2 and an indoor unit 3. Indoor unit 3 includes connection ports 121 and 122. Outdoor unit 2 includes connection ports 111 and 112. Connection port 121 of indoor unit 3 is connected to connection port 112 of outdoor unit 2 through an extension pipe 86. Connection port 122 of indoor unit 3 is connected to connection port 111 of outdoor unit 2 through an extension pipe 83. In this way, indoor unit 3 is configured to be connectable to outdoor unit 2 through extension pipes 83 and 86.

Outdoor unit 2 includes a four-way valve 50, a compressor 10, an outdoor heat exchanger 40, a blower 45, and an expansion valve 30.

Four-way valve 50 includes connection ports 51, 52, 53, and 54. Connection port 51 of four-way valve 50 is connected to a suction port 11 of compressor 10 through a pipe 90. Connection port 52 of four-way valve 50 is connected to connection port 111 of outdoor unit 2 through a pipe 82. Connection port 53 of four-way valve 50 is connected to a discharge port 12 of compressor 10 through a pipe 81. Connection port 54 of four-way valve 50 is connected to the one end side of outdoor heat exchanger 40 through a pipe 89. Four-way valve 50 is configured to switch the state of the inside communication in accordance with a control signal C5 from controller 100.

The other end side of outdoor heat exchanger 40 is connected to the one end side of expansion valve 30 through a pipe 88. The other end side of expansion valve 30 is connected to connection port 112 of outdoor unit 2 through a pipe 87.

In accordance with a control signal C1 from controller 100, compressor 10 is configured to start and stop its operation and to change its rotation speed during operation. Controller 100 outputs control signal C1 to compressor 10 to thereby arbitrarily change the driving frequency of compressor 10. Compressor 10 changes its number of rotations per unit time, i.e., its rotation speed, as the driving frequency changes, to thereby change the amount of refrigerant to be discharged. Compressor 10 may be of various types, and for example, a compressor of scroll type, rotary type, screw type or the like may be adopted as compressor 10.

Outdoor heat exchanger 40 exchanges heat between the refrigerant and the air suctioned from the outdoor side by blower 45, i.e., the outside air.

Blower 45 includes a fan 41 and a motor 42. Fan 41 sends air suctioned from the outdoor side to outdoor heat exchanger 40. In accordance with a control signal C4 from controller 100, motor 42 is configured to start and stop driving of fan 41 and to change the rotation speed of fan 41 while fan 41 is driven. Specifically, controller 100 outputs control signal C4 to motor 42 to arbitrarily change the driving frequency of motor 42. Motor 42 changes the number of rotations per unit time, i.e., the rotation speed, of fan 41 as the driving frequency changes.

Expansion valve 30 is an electronic expansion valve whose degree of opening is adjusted in accordance with a control signal C3 from controller 100. Expansion valve 30 lowers the pressure of the refrigerant having flowed thereinto and discharges the refrigerant obtained by decompression.

Indoor unit 3 includes an indoor heat exchanger 20 and a blower 25. The one end side of indoor heat exchanger 20 is connected to connection port 122 of indoor unit 3 through a pipe 84. The other end side of indoor heat exchanger 20 is connected to connection port 121 of indoor unit 3 through a pipe 85.

Indoor heat exchanger 20 exchanges heat between the refrigerant and the air suctioned from the indoor side by blower 25.

Blower 25 includes a fan 21 and a motor 22. Fan 21 sends air suctioned from the indoor side to indoor heat exchanger 20. In accordance with a control signal C2 from controller 100, motor 22 is configured to start and stop driving of fan 21 and to change the rotation speed of fan 21 while fan 21 is driven. Controller 100 outputs control signal C2 to motor 22 to arbitrarily change the driving frequency of motor 22. Motor 22 changes the number of rotations per unit time, i.e., the rotation speed, of fan 21 as the driving frequency changes.

Controller 100 is mounted on outdoor unit 2. Controller 100 includes a processor 101 and a storage device 102. In order to control each of actuators such as compressor 10, expansion valve 30, blowers 25 and 45, and four-way valve 50 in refrigerant circuit 4, controller 100 is capable of communicating with each of these actuators in refrigerant circuit 4. Controller 100 may be separate from outdoor unit 2.

Processor 101 is a main component for computation that executes various programs to thereby control each of the actuators in refrigerant circuit 4. Processor 101 is configured, for example, of at least one of a central processing unit (CPU) and a field programmable gate array (FPGA). Processor 101 may be configured of processing circuitry such as an application specific integrated circuit (ASIC).

In the first embodiment, processor 101 outputs control signal C1 to compressor 10 to control the rotation speed of compressor 10. Processor 101 outputs control signal C2 to motor 22 to control the rotation speed of fan 21. Processor 101 outputs control signal C3 to expansion valve 30 to control the degree of opening of expansion valve 30. Processor 101 outputs control signal C4 to motor 42 to control the rotation speed of fan 41. Processor 101 outputs control signal C5 to four-way valve 50 to switch the state of communication inside four-way valve 50.

Storage device 102 includes volatile memory such as dynamic random access memory (DRAM) and static random access memory (SRAM), or nonvolatile memory such as read only memory (ROM) and flash memory. Further, storage device 102 may be a solid state drive (SSD), a hard disk drive (HDD) or the like, in which case processor 11 may include volatile memory such as DRAM and SRAM, or non-volatile memory such as ROM and flash memory.

Storage device 102 stores various programs describing the processing procedure of processor 101. Processor 101 executes the program stored in storage device 102 to control each of the actuators in refrigerant circuit 4.

The processing by controller 100 is not limited to software processing by a computer, but may be implemented by hardware processing by an electronic circuit. Further, the processing by controller 100 may be implemented by a combination of software processing and hardware processing.

Air conditioner 1 is controlled to operate in one of a plurality of types of operation modes including: a heating operation for heating an indoor space to be air conditioned; and a cooling operation for cooling the indoor space.

The following first describes the operation of air conditioner 1 in the heating operation. In the heating operation, the state of communication inside four-way valve 50 is established in such a manner that connection port 51 communicates with connection port 54 and connection port 52 communicates with connection port 53, as indicated by solid lines in Fig. 1. In other words, in the heating operation, suction port 11 of compressor 10 communicates with outdoor heat exchanger 40 while discharge port 12 of compressor 10 communicates with indoor unit 3.

Compressor 10 suctions the low-temperature and low-pressure gas refrigerant having flowed thereinto from outdoor heat exchanger 40, and compresses the suctioned gas refrigerant to raise the pressure of the gas refrigerant. Compressor 10 discharges high-temperature and high-pressure gas refrigerant obtained by compression to indoor heat exchanger 20.

In the heating operation, indoor heat exchanger 20 functions as a condenser. Indoor heat exchanger 20 exchanges heat of the high-temperature and high-pressure gas refrigerant from compressor 10 with the air suctioned from the indoor space by blower 25. The gas refrigerant from which heat has been dissipated to the air by this heat exchange is condensed inside indoor heat exchanger 20 and thereby turns into high-temperature and high-pressure liquid refrigerant. The high-temperature and high-pressure liquid refrigerant obtained by indoor heat exchanger 20 flows out to expansion valve 30. The air having absorbed heat from the gas refrigerant in indoor heat exchanger 20 is sent again to the indoor space. Thereby, the indoor space is heated.

Expansion valve 30 lowers the pressure of the high-temperature and high-pressure liquid refrigerant from indoor heat exchanger 20. The low-temperature and low-pressure gas-liquid two-phase refrigerant obtained by expansion valve 30 flows out to outdoor heat exchanger 40.

In the heating operation, outdoor heat exchanger 40 functions as an evaporator. Outdoor heat exchanger 40 exchanges the heat of the low-temperature and low-pressure gas-liquid two-phase refrigerant from expansion valve 30 with the air suctioned from the outdoor side by blower 45. The gas-liquid two-phase refrigerant that has absorbed heat from air by this heat exchange evaporates inside outdoor heat exchanger 40, and thereby, turns into low-temperature and low-pressure gas refrigerant. The low-temperature and low-pressure gas refrigerant obtained by outdoor heat exchanger 40 flows out to compressor 10.

In this way, in the heating operation, the refrigerant flows through compressor 10, indoor heat exchanger 20 (the condenser), expansion valve 30, and outdoor heat exchanger 40 (the evaporator) in this order.

The following describes the operation of air conditioner 1 in the cooling operation. In the cooling operation, the state of communication inside four-way valve 50 is established in such a manner that connection port 51 communicates with connection port 52 and connection port 53 communicates with connection port 54, as indicated by solid lines in Fig. 2. In other words, in the cooling operation, suction port 11 of compressor 10 communicates with indoor unit 3 while discharge port 12 of compressor 10 communicates with outdoor heat exchanger 40.

Compressor 10 suctions the low-temperature and low-pressure gas refrigerant having flowed from indoor heat exchanger 20, and compresses the suctioned gas refrigerant to raise the pressure of the gas refrigerant. Compressor 10 discharges the high-temperature and high-pressure gas refrigerant obtained by compression to outdoor heat exchanger 40.

In the cooling operation, outdoor heat exchanger 40 functions as a condenser. Outdoor heat exchanger 40 exchanges the heat of the high-temperature and high-pressure gas refrigerant from compressor 10 with the air suctioned from the outdoor side by blower 45. The gas refrigerant from which heat has been dissipated to the air by this heat exchange is condensed inside outdoor heat exchanger 40 and thereby turns into high-temperature and high-pressure liquid refrigerant. The high-temperature and high-pressure liquid refrigerant obtained by outdoor heat exchanger 40 flows out to expansion valve 30.

Expansion valve 30 lowers the pressure of the high-temperature and high-pressure liquid refrigerant from outdoor heat exchanger 40. The low-temperature and low-pressure gas-liquid two-phase refrigerant obtained by decompression of expansion valve 30 flows out to indoor heat exchanger 20.

In the cooling operation, indoor heat exchanger 20 functions as an evaporator. Indoor heat exchanger 20 exchanges the heat of the low-temperature and low-pressure gas-liquid two-phase refrigerant from expansion valve 30 with the air suctioned from the indoor side by blower 25. The gas-liquid two-phase refrigerant that has absorbed heat from the air by this heat exchange evaporates inside indoor heat exchanger 20 and thereby turns into low-temperature and low-pressure gas refrigerant. The low-temperature and low-pressure gas refrigerant obtained by indoor heat exchanger 20 flows out to compressor 10. The air from which heat has been absorbed by the gas refrigerant in indoor heat exchanger 20 is again sent to the indoor space. Thereby, the indoor space is cooled.

In this way, in the cooling operation, the refrigerant flows through compressor 10, outdoor heat exchanger 40 (the condenser), expansion valve 30, and indoor heat exchanger 20 (the evaporator) in this order.

Air conditioner 1 further includes pressure sensors 71 and 72, and temperature sensors 61, 62, 63, and 64.

Pressure sensor 71 is attached to pipe 90. Pressure sensor 71 measures the pressure of the refrigerant flowing between connection port 51 of four-way valve 50 and compressor 10, and outputs pressure P1 obtained by this measurement to controller 100. Pressure sensor 72 is attached to pipe 81. Pressure sensor 72 measures the pressure of the refrigerant flowing between compressor 10 and connection port 53 of four-way valve 50, and outputs pressure P2 obtained by this measurement to controller 100.

Temperature sensor 61 is attached to pipe 90. Temperature sensor 61 measures the temperature of the refrigerant flowing between connection port 51 of four-way valve 50 and compressor 10, and outputs a temperature T1 obtained by this measurement to controller 100. Temperature sensor 62 is attached to pipe 81. Temperature sensor 62 measures the temperature of the refrigerant flowing between compressor 10 and connection port 53 of four-way valve 50, and outputs a temperature T2 obtained by this measurement to controller 100.

Temperature sensor 63 is attached to pipe 85. Temperature sensor 63 measures the temperature of the refrigerant flowing between indoor heat exchanger 20 and connection port 121 of indoor unit 3, and outputs a temperature T3 obtained by this measurement to controller 100. Temperature sensor 64 is attached to pipe 88. Temperature sensor 64 measures the temperature of the refrigerant flowing between expansion valve 30 and outdoor heat exchanger 40, and outputs a temperature T4 obtained by this measurement to controller 100.

In air conditioner 1 configured as described above, controller 100 controls at least one actuator that is one of compressor 10, expansion valve 30, and blower 45 by PID control or PI control.

When performing the PID control, according to the following equation (1), controller 100 determines an amount of operation u(t) of the actuator by adding up the amount of operation obtained by proportional control, the amount of operation obtained by integral control, and the amount of operation obtained by differential control.
[Equation 1]

$$u(t) = K_p e(t) + K_I \int_0^t e(t)dt + K_d \frac{d}{dt}e(t) \quad \cdots \; (1)$$

When performing the PI control, according to the following equation (2), controller 100 determines the amount of operation u(t) of the actuator by adding up the amount of operation obtained by proportional control and the amount of operation obtained by integral control.

[Equation 2]

$$u(t) = K_p e(t) + K_i \int_0^t e(t)dt \quad \cdots \; (2)$$

In the equations (1) and (2), $K_p$ is a parameter used for proportional control and also referred to as a proportional gain. $K_i$ is a parameter used for integral control and also referred to as an integral gain. $K_d$ is a parameter used for differential control and also referred to as a differential gain.

Assuming that the refrigeration cycle in air conditioner 1 is a first-order delay system, proportional gain $K_p$ is expressed by the following equation (3) based on the pole placement method.

[Equation 3]

$$K_p = \frac{T}{K \times T_{ref}} \quad \cdots \; (3)$$

Assuming that the refrigeration cycle in air conditioner 1 is a first-order delay system, integral gain $K_i$ is expressed by the following equation (4) based on the pole placement method.

[Equation 4]

$$K_i = \frac{K_p}{T} \quad \cdots \; (4)$$

In the equations (3) and (4), K denotes a response gain, which is the amount of change in a value obtained in response to the amount of operation of the actuator. $T_{ref}$ denotes a time constant determined at the time of design. T denotes a response time constant.

As a method of tuning parameters $K_p$, $K_i$, and $K_d$ by controller 100, a step response test method is used. In the step response test method, the amount of operation of an actuator is changed in a stepwise manner to calculate parameters from the response gain responsive to the change in the amount of operation.

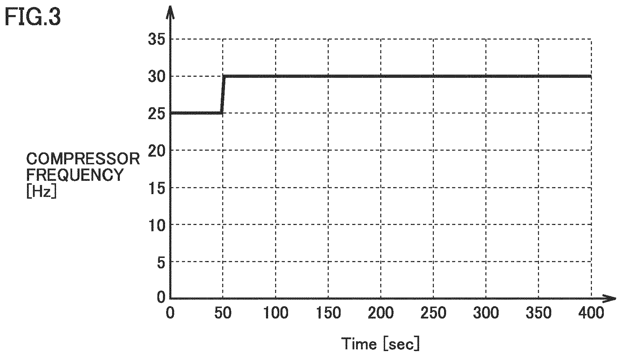

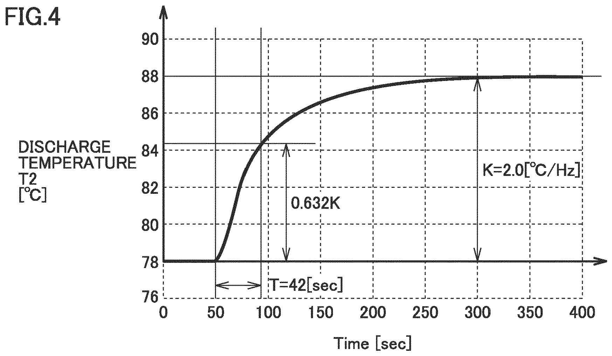

Referring to Figs. 3 and 4, the following describes an example of parameter calculation during PI control performed by controller 100. In general, each of the cooling capability and the heating capability is proportional to the number of rotations of compressor 10. Thus, when controller 100 performs PID control or PI control for compressor 10, it is effective as a parameter tuning method to select compressor 10 as an actuator for which the step response test is conducted.

Fig. 3 is a diagram showing changes in amount of operation in compressor 10. Fig. 4 is a diagram showing changes in response gain K in compressor 10. Note that excessively large design time constant $T_{ref}$ delays the control responsiveness, and excessively small design time constant $T_{ref}$ deteriorates the control stability, and therefore, design time constant $T_{ref}$ is set at an optimal time, i.e., 60 seconds, in the example shown in Figs. 3 and 4.

As shown in Fig. 3, in the present example, it is assumed that controller 100 changes the driving frequency of compressor 10 from 25 Hz to 30 Hz in a stepwise manner at the time point of 50 seconds after the start of the measurement. In other words, controller 100 increases the driving frequency by 5 Hz as the amount of operation of compressor 10 at the time point of 50 seconds to thereby increase the rotation speed of compressor 10.

When controller 100 increases the driving frequency of compressor 10, temperature T2 of the refrigerant discharged from compressor 10 increases with a delay from the change in the driving frequency, as shown in Fig. 4. In the example shown in Fig. 4, temperature T2 gradually increases from the time point of 50 seconds to the time point of 300 seconds. The amount of change in temperature T2 responsive to the change in driving frequency by 5 Hz, i.e., the response gain, is 10°C, and response gain K per hertz of the driving frequency is 2°C. Response time constant T is determined by the time required to reach 63.2 % of the response gain that is the amount of change in temperature T2, in which case response time constant T is 42 seconds.

T = 42, K = 2, and $T_{ref}$ = 60 seconds are substituted into the above-mentioned equation (3) to thereby calculate 0.35 as proportional gain $K_p$. $K_p$ = 0.35 and T = 42 are substituted into the above-mentioned equation (4) to thereby calculate 0.0083 as integral gain $K_i$.

Although the parameter design method according to the pole placement method is used in the above-mentioned example, a different parameter design method according to another method may be used.

Due to the nonlinear transient response of the refrigeration cycle in this case, response gain K and response time constant T may change according to the state of air conditioner 1. Smaller response gain K of the actuator requires a larger amount of operation of the actuator in order to bring the value that changes according to response gain K of the actuator (for example, the temperature or the pressure of the refrigerant flowing through refrigerant circuit 4) close to a target value, and accordingly, the parameters need to be set at larger values.

For example, assuming that the state of air conditioner 1 includes the first state in which response gain K is smaller than the first value and the second state in which response gain K is larger than the first value, when air conditioner 1 enters the second state during the PID control or the PI control performed using the parameters determined in the first state, the amount of operation of the actuator may become excessively large due to the parameter values. In such a case, the value that changes according to response gain K of the actuator may significantly exceed the target value, the followability to the target value may decrease, or the value that changes according to response gain K of the actuator may exceed the guaranteed range to thereby activate protection control such as an emergency stop.

Alternatively, larger response time constant T requires a larger amount of operation of the actuator in order to bring the value that changes according to response time constant T of the actuator closer to the target value, and accordingly, the parameters need to be set at larger values.

For example, assuming that the state of air conditioner 1 includes the third state in which response time constant T is larger than the second value and the fourth state in which response time constant T is smaller than the second value, when air conditioner 1 enters the fourth state during the PID control or the PI control performed using the parameters determined in the third state, the amount of operation of the actuator may become excessively large due to the parameter values. In such a case, the value that changes according to response time constant T of the actuator may significantly exceed the target value, the followability to the target value may decrease, or the value that changes according to response time constant T of the actuator may exceed the guaranteed range to thereby activate protection control such as an emergency stop.

Thus, air conditioner 1 according to the first embodiment is configured to determine optimal parameters in consideration of the state of air conditioner 1.

Specifically, air conditioner 1 calculates the degree of subcooling of the refrigerant having passed through the heat exchanger functioning as a condenser among indoor heat exchanger 20 and outdoor heat exchanger 40, and then calculates parameters used for controlling the actuator in the state in which the calculated degree of subcooling is equal to or greater than a threshold value.

For example, when air conditioner 1 performs a heating operation, indoor heat exchanger 20 functions as a condenser. When the degree of subcooling of the refrigerant having passed through indoor heat exchanger 20 is ensured to be equal to or greater than the threshold value, the liquid refrigerant fills, for example, 10% to 30% of the internal volume of indoor heat exchanger 20 and the entire internal volumes of pipes 85 to 87. In other words, when the degree of subcooling of the refrigerant having passed through indoor heat exchanger 20 is equal to or greater than the threshold value, the occupied space of the gas refrigerant in the path from discharge port 12 of compressor 10 to the inlet portion of expansion valve 30 decreases as compared with the case where the degree of subcooling of the refrigerant having passed through indoor heat exchanger 20 is less than the threshold value.

Alternatively, when air conditioner 1 performs a cooling operation, outdoor heat exchanger 40 functions as a condenser. When the degree of subcooling of the refrigerant having passed through outdoor heat exchanger 40 is ensured to be equal to or greater than the threshold value, the liquid refrigerant fills, for example, 10% to 30% of the internal volume of outdoor heat exchanger 40 and the entire internal volume of pipe 88. In other words, when the degree of subcooling of the refrigerant having passed through outdoor heat exchanger 40 is equal to or greater than the threshold value, the occupied space of the gas refrigerant in the path from discharge port 12 of compressor 10 to the inlet portion of expansion valve 30 decreases as compared with the case where the degree of subcooling of the refrigerant having passed through outdoor heat exchanger 40 is less than the threshold value.

As described above, when the occupied space of the gas refrigerant decreases in the state in which the degree of subcooling of the refrigerant having passed through the condenser is ensured to be equal to or greater than the threshold value, response gain K responsive to the change in amount of operation of the actuator increases, and response time constant T decreases. Thus, air conditioner 1 determines the parameters in the state in which response gain K increases and response time constant T decreases, i.e., in the state in which the degree of subcooling of the refrigerant having passed through the condenser is ensured to be equal to or greater than the threshold value, and thereby, even if the state of air conditioner 1 changes after determination of the parameters, the amount of operation of the actuator can be prevented from becoming excessively large due to the determined parameter values.

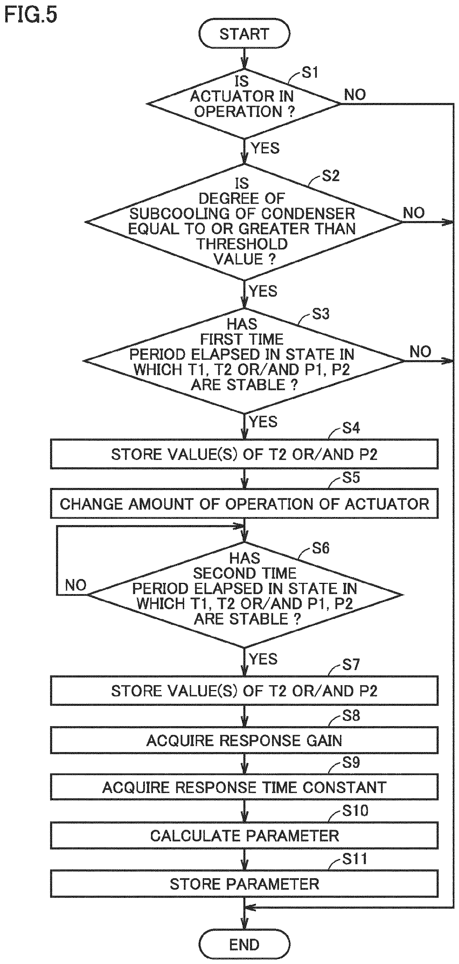

Referring to Fig. 5, the following describes a parameter calculation process by controller 100 using the step response test method. Fig. 5 is a flowchart for illustrating the parameter calculation process of controller 100. Controller 100 executes a control program stored in storage device 102 to perform a calculation process in the flowchart shown in Fig. 5. The calculation process in this flowchart is called and executed from the main control routine of controller 100 at regular intervals. Note that "S" in the figure is used as an abbreviation for "STEP".

As shown in Fig. 5, controller 100 determines whether or not the actuator is in operation (S1). When the actuator is not in operation (NO in S1), controller 100 ends the present process.

When the actuator is in operation (YES in S1), controller 100 determines whether or not the degree of subcooling of the refrigerant having passed through the condenser is equal to or greater than a threshold value (S2).

For example, when air conditioner 1 is performing a heating operation, controller 100 calculates the degree of subcooling of the refrigerant having passed through indoor heat exchanger 20. Specifically, from pressure sensor 72, controller 100 acquires pressure P2 of the refrigerant discharged from compressor 10 and then calculates a saturation temperature $T_{sat}$ of the refrigerant from the acquired pressure P2. Further, from temperature sensor 63, controller 100 acquires temperature T3 of the refrigerant having passed through indoor heat exchanger 20. According to the following equation (5), controller 100 subtracts temperature T3 from saturation temperature $T_{sat}$ to thereby calculate a degree of subcooling SC of the refrigerant having passed through indoor heat exchanger 20.

[Equation 5]

$$SC = Tsat - T3 \quad \dots \quad (5)$$

For example, when air conditioner 1 is performing a cooling operation, controller 100 calculates the degree of subcooling of the refrigerant having passed through outdoor heat exchanger 40. Specifically, from pressure sensor 72, controller 100 acquires pressure P2 of the refrigerant discharged from compressor 10 and then calculates saturation temperature $T_{sat}$ of the refrigerant from the acquired pressure P2. Further, from temperature sensor 64, controller 100 acquires temperature T4 of the refrigerant having passed through outdoor heat exchanger 40. According to the following equation (6), controller 100 subtracts temperature T4 from saturation temperature $T_{sat}$ to thereby calculate degree of subcooling SC of the refrigerant having passed through outdoor heat exchanger 40.

[Equation 6]

$$SC = Tsat - T4 \dots \quad (6)$$

In general, in the case where the degree of subcooling of the refrigerant having passed through the condenser is equal to or higher than 2°C, it is considered that the degree of subcooling of the refrigerant having passed through the condenser can be sufficiently ensured even in consideration of the measurement accuracy of temperature sensor 63 or 64 and the disturbance factor of the refrigeration cycle. In other words, in S2, controller 100 determines whether or not the degree of subcooling of the refrigerant having passed through the condenser is equal to or higher than 2 °C (the threshold value).

When the degree of subcooling of the refrigerant having passed through the condenser is not equal to or greater than the threshold value (NO in S2), controller 100 ends the present process.

When the degree of subcooling of the refrigerant having passed through the condenser is equal to or greater than the threshold value (YES in S2), controller 100 determines whether or not a first time period has elapsed in the state in which at least one value of the temperature and the pressure of the refrigerant in refrigerant circuit 4 is stable (S3).

Specifically, controller 100 determines whether or not the first time period has elapsed in the state in which each of temperature T1 of the refrigerant suctioned into compressor 10 and measured by temperature sensor 61 and temperature T2 of the refrigerant discharged from compressor 10 and measured by temperature sensor 62 is stable within a certain range (for example, within 0.5°C). Alternatively, controller 100 determines whether or not the first time period has elapsed in the state in which each of pressure P1 of the refrigerant suctioned into compressor 10 and measured by pressure sensor 71 and pressure P2 of the refrigerant discharged from compressor 10 and measured by pressure sensor 72 is stable within a certain range (for example, within 10 kPa).

Controller 100 may determine whether or not the first time period has elapsed in the state in which both temperatures T1 and T2 and pressures P1 and P2 are stable within a certain range. Alternatively, controller 100 may determine whether or not the first time period has elapsed in the state in which either temperatures T1 and T2 or pressures P1 and P2 are stable within a certain range. Further, controller 100 may determine whether or not the first time period has elapsed in the state in which temperature T3 of the refrigerant measured by temperature sensor 63 or temperature T4 of the refrigerant measured by temperature sensor 64 is stable within a certain range. Controller 100 should only determine whether or not the first time period has elapsed in the state in which the measured value of at least one of the temperature sensors and the pressure sensors included in air conditioner 1 is stable within a certain range.

The time period used as the first time period is, for example, 5 minutes or the like, which is determined in advance by a designer. For example, when each of temperature sensors 61 and 62 and pressure sensors 71 and 72 performs a measurement at intervals of 10 seconds under the control of controller 100, the first time period may be 90 seconds that corresponds to the time period during which ten measurements are performed.

When the first time period has not elapsed in the state in which at least one value of the temperature and the pressure of the refrigerant in refrigerant circuit 4 is stable (NO in S3), controller 100 ends the present process.

When the first time period has elapsed in the state in which at least one value of the temperature and the pressure of the refrigerant in refrigerant circuit 4 is stable (YES in S3), controller 100 acquires at least one of temperature T2 of the refrigerant discharged from compressor 10 and measured by temperature sensor 62 and pressure P2 of the refrigerant discharged from compressor 10 and measured by pressure sensor 72, and then causes storage device 102 to store the acquired value (S4).

Then, controller 100 changes the amount of operation of the actuator (S5). For example, controller 100 changes the driving frequency of compressor 10 in a stepwise manner as shown in Fig. 3 to thereby increase the rotation speed of compressor 10.

In each of the cooling operation and the heating operation, the number of rotations of compressor 10 increases, so that the degree of subcooling of the refrigerant having passed through the condenser may increase. Thus, controller 100 performs the step operation for compressor 10 so as to increase the rotation speed of compressor 10 in the step response test, and thereby, during the step response test, can prevent the parameters for the PID control or the PI control from becoming smaller due to the unintentional decrease in the degree of subcooling of the refrigerant having passed through the condenser.

After controller 100 changes the amount of operation of the actuator, it determines whether or not a second time period has elapsed in the state in which at least one value of the temperature and the pressure of the refrigerant in refrigerant circuit 4 becomes stable again (S6).

Specifically, controller 100 determines whether or not the second time period has elapsed in the state in which each of temperature T1 of the refrigerant suctioned into compressor 10 and measured by temperature sensor 61 and temperature T2 of the refrigerant discharged from compressor 10 and measured by temperature sensor 62 is stable within a certain range (for example, within 0.5°C). Alternatively, controller 100 determines whether or not the second time period has elapsed in the state in which each of pressure P1 of the refrigerant suctioned into compressor 10 and measured by pressure sensor 71 and pressure P2 of the refrigerant discharged from compressor 10 and measured by pressure sensor 72 is stable within a certain range (for example, within 10 kPa).

Controller 100 may determine whether or not the second time period has elapsed in the state in which both temperatures T1 and T2 and pressures P1 and P2 are stable within a certain range. Alternatively, controller 100 may determine whether or not the second time period has elapsed in the state in which either temperatures T1 and T2 or pressures P1 and P2 are stable within a certain range. Further, controller 100 may determine whether or not the first time period has elapsed in the state in which temperature T3 of the refrigerant measured by temperature sensor 63 or temperature T4 of the refrigerant measured by temperature sensor 64 is stable within a certain range. Controller 100 should only determine whether or not the second time period has elapsed in the state in which the measured value of at least one of the temperature sensors and the pressure sensors included in air conditioner 1 is stable within a certain range.

The time period used as the second time period is, for example, 5 minutes or the like, which is determined in advance by a designer. For example, when each of temperature sensors 61 and 62 and pressure sensors 71 and 72 performs a measurement at intervals of 10 seconds under the control of controller 100, the second time period may be 90 seconds that corresponds to the time period during which ten measurements are performed.

When the second time period has not elapsed in the state in which at least one value of the temperature and the pressure of the refrigerant in refrigerant circuit 4 is stable (NO in S6), controller 100 repeats the process in S6.

When the second time period has elapsed in the state in which at least one value of the temperature and the pressure of the refrigerant in refrigerant circuit 4 is stable (YES in S6), controller 100 acquires at least one of temperature T2 of the refrigerant discharged from compressor 10 and measured by temperature sensor 62 and pressure P2 of the refrigerant discharged from compressor 10 and measured by pressure sensor 72, and then causes storage device 102 to store the acquired value (S7).

When controller 100 causes storage device 102 to store temperature T2 of the refrigerant acquired immediately before the amount of operation of the actuator is changed in the process in S4, controller 100 causes storage device 102 to store temperature T2 of the refrigerant acquired after the amount of operation of the actuator is changed in the process in S7. Alternatively, when controller 100 causes storage device 102 to store pressure P2 of the refrigerant acquired immediately before the amount of operation of the actuator is changed in the process in S4, controller 100 causes storage device 102 to store pressure P2 of the refrigerant acquired after the amount of operation of the actuator is changed in the process in S7.

In this case, when any one of actuators (for example, expansion valve 30 and blower 45) other than compressor 10 operate during the step response test, there is a possibility that a pure step response test by the operation of compressor 10 may not be able to be performed. Thus, during the elapse of each of the first time period and the second time period, controller 100 does not change but fixes the amount of operation of each actuator (for example, expansion valve 30 and blower 45) other than compressor 10 that is a target of the step operation. Thereby, controller 100 can perform the step response test for only compressor 10 as a target of the step operation, so that the accuracy in calculation of the parameters can be improved.

Controller 100 calculates the response gain of the actuator according to the following equation (7) (S8).
[Equation 7]

$$K = K2 - K1 \dots \ (7)$$

In the equation (7), K denotes the response gain, K1 denotes temperature T2 or pressure P2 before the amount of operation of the actuator is changed, and K2 denotes temperature T2 or pressure P2 after the amount of operation of the actuator is changed. For example, when temperature T2 of the refrigerant before the amount of operation of the actuator is changed is stored in storage device 102 in the process of S4 and temperature T2 of the refrigerant after the amount of operation of the actuator is changed is stored in storage device 102 in the process of S7, K1 attains to temperature T2 acquired before the amount of operation of the actuator is changed, and K2 attains to temperature T2 acquired after the amount of operation of the actuator is changed. For example, when pressure P2 of the refrigerant before the amount of operation of the actuator is changed is stored in storage device 102 in the process of S4, and pressure P2 of the refrigerant after the amount of operation of the actuator is changed is stored in storage device 102 in the process of S7, K1 attains to pressure P2 acquired before the amount of operation of the actuator is changed, and K2 attains to pressure P2 acquired after the amount of operation of the actuator is changed.

Controller 100 calculates response time constant T based on the acquired response gain K (S9). As described with reference to Fig. 4, response time constant T is determined by the time required until response gain K reaches 63.2%.

Controller 100 calculates parameters from the acquired response gain K and response time constant T (S10). Specifically, the parameters are proportional gain Kp, integral gain Ki, and differential gain Kd. Controller 100 calculates these parameters based on response gain K and response time constant T. For example, controller 100 calculates proportional gain $K_p$ by substituting the acquired response gain K and response time constant T and the preset design time constant $T_{ref}$ into the above-mentioned equation (3). Further, controller 100 calculates integral gain $K_i$ by substituting proportional gain $K_p$ and response time constant T into the above-mentioned equation (4).

Controller 100 causes storage device 102 to store proportional gain $K_p$ and integral gain $K_i$, each of which is a calculated parameter (S11), and ends the present process.

In the above-described example, controller 100 calculates proportional gain $K_p$ and integral gain $K_i$, each of which is a parameter in the PI control, but it may also calculate proportional gain $K_p$, integral gain $K_i$, and differential gain $K_d$, each of which is a parameter in the PID control, in the state in which the degree of subcooling of the refrigerant having passed through the condenser is equal to or greater than a threshold value.

As described above, air conditioner 1 calculates parameters used for controlling actuators such as compressor 10 in the state in which the degree of subcooling of the refrigerant having passed through the condenser is equal to or greater than the threshold value. Thus, air conditioner 1 performs PID control or PI control using the parameters determined in the state in which the degree of subcooling of the refrigerant having passed through the condenser is ensured to be equal to or greater than the threshold value, and therefore, even if response gain K or response time constant T varies, the amount of operation of the actuator can be prevented from becoming excessively large due to the parameter values. As a result, air conditioner 1 can prevent the followability to the target value from decreasing, or can prevent the value that changes according to response gain K of the actuator from exceeding a guaranteed range to thereby activate protection control such as an emergency stop.

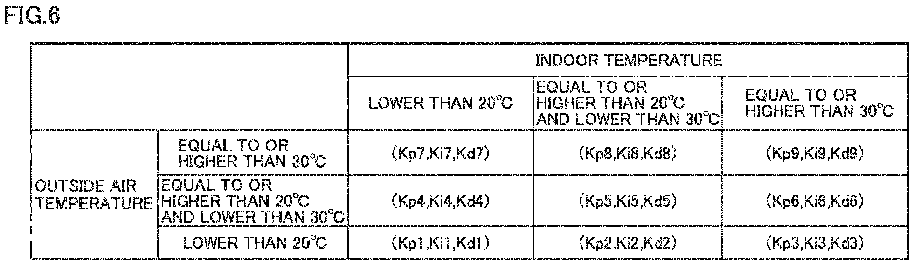

The transient response of each of the actuators such as compressor 10, expansion valve 30, and blower 45 may vary depending on the installation environment and the operating conditions of air conditioner 1. Thus, as shown in Fig. 6, in air conditioner 1, controller 100 performs a step response test for each of a plurality of predetermined states including the outside air temperature and the indoor temperature, and then calculates parameters for PID control or PI control.

Fig. 6 is a diagram showing a parameter setting table. The parameter setting table shown in Fig. 6 is stored in storage device 102.

The parameter setting table includes a setting of three states of the outside air temperature of: lower than 20°C; equal to or higher than 20°C and lower than 30°C; and equal to or higher than 30°C. Further, the parameter setting table includes a setting of three states of the indoor temperature of: lower than 20°C; equal to or higher than 20°C and lower than 30°C; and equal to or higher than 30°C. In the parameter setting table, a parameter storage area is provided for each of the plurality of states determined by the combination of the outside air temperature and the indoor temperature.

After air conditioner 1 is installed in the indoor space, controller 100 calculates parameters by a step response test each time the plurality of states determined in advance by the parameter setting table occur, and stores the calculated parameters in a storage area corresponding to the state in which the step response test has been performed.

For example, when controller 100 calculates a proportional gain $K_p1$, an integral gain $K_i1$, and a differential gain $K_d1$ by the step response test in the case where the outside air temperature is lower than 20°C and the indoor temperature is lower than 20°C, controller 100 saves proportional gain $K_p1$, integral gain $K_i1$, and differential gain $K_d1$ in the storage area corresponding to the state in which the outside air temperature is lower than 20°C and the indoor temperature is lower than 20°C, and then causes storage device 102 to store these gains.

Thereby, since air conditioner 1 can control the actuator using the parameters determined in accordance with the installation environment and the operating conditions of air conditioner 1, excellent target value following control can be implemented in various operation states of air conditioner 1.

Further, controller 100 may perform a step operation for each actuator in a plurality of stages at each of the outside air temperatures and the indoor temperatures, and determine parameters in each of the step operations in each of the plurality of stages. In this way, air conditioner 1 can further acquire a plurality of parameters according to the amount of operation of the actuator for each of the states such as the outside air temperature and the indoor temperature. Thereby, air conditioner 1 can perform PID control or PI control suitable to various states using the parameters determined according to these various states.

Second Embodiment

An air conditioner according to the second embodiment will be hereinafter described. The following describes only portions of the air conditioner according to the second embodiment that are different from those in air conditioner 1 according to the first embodiment.

In air conditioner 1 according to the first embodiment, the step operation is performed for compressor 10 in the step response test to thereby increase the rotation speed of compressor 10, but the step operation may be performed for any actuator other than compressor 10. For example, in the air conditioner according to the second embodiment, controller 100 may perform a step operation for blower 45 that sends air to outdoor heat exchanger 40.

Controlling the number of rotations of blower 45 is indispensable for appropriately setting the pressure and the temperature discharged from compressor 10 or the pressure and the temperature suctioned into compressor 10. Thus, when controller 100 performs PID control or PI control on blower 45, it is effective as a parameter tuning method to select blower 45 as an actuator for which a step response test is conducted.

Further, in each of the cooling operation and the heating operation, the degree of subcooling of the refrigerant having passed through the condenser may increase as the number of rotations of blower 45 decreases. Thus, in S5 of the step response test in Fig. 5, controller 100 performs the step operation for blower 45 so as to decrease the rotation speed of blower 45, and thereby, during the step response test, can prevent the parameters for the PID control or the PI control from becoming smaller due to the unintentional decrease in the degree of subcooling of the refrigerant having passed through the condenser.

Third Embodiment

An air conditioner according to the third embodiment will be thereinafter described. The following describes only portions of the air conditioner according to the third embodiment that are different from those in air conditioner 1 according to the first embodiment.

In the air conditioner according to the third embodiment, controller 100 may perform a step operation for expansion valve 30.

Controlling the degree of opening of expansion valve 30 leads to an appropriate degree of subcooling of the refrigerant having passed through the condenser and an appropriate degree of superheating of the refrigerant having passed through the evaporator, and thus, is indispensable for appropriately achieving the cooling capability and the heating capability. Therefore, when controller 100 performs PID control or PI control on expansion valve 30, it is effective as a parameter tuning method to select expansion valve 30 as an actuator for which a step response test is conducted.

Further, when the degree of opening of expansion valve 30 decreases in each of the cooling operation and the heating operation, the degree of subcooling of the refrigerant having passed through the condenser may increase. Thus, in S5 of the step response test in Fig. 5, controller 100 performs the step operation for expansion valve 30 so as to decrease the degree of opening of expansion valve 30, and thereby, during the step response test, can prevent the parameters for the PID control or the PI control from becoming smaller due to the unintentional decrease in the degree of subcooling of the refrigerant having passed through the condenser.

Fourth Embodiment

An air conditioner according to the fourth embodiment will be hereinafter described. The following describes only portions of the air conditioner according to the fourth embodiment that are different from those in air conditioner 1 according to the first embodiment.

Although air conditioner 1 according to the first embodiment is configured such that one indoor heat exchanger 20 is connected to one outdoor heat exchanger 40, the air conditioner according to the fourth embodiment may be configured such that a plurality of indoor heat exchangers 20 are connected to one outdoor heat exchanger 40, or a plurality of indoor heat exchangers 20 are respectively connected to a plurality of outdoor heat exchangers 40.

In the step response test, when a certain amount or more of refrigerant moves inside refrigerant circuit 4 of the air conditioner, response time constant T may increase. In particular, when the refrigerant involving evaporation or condensation moves into the heat exchanger with no heat exchange performed therein in the state in which the refrigerant is not circulating, it takes time to transfer and receive the amount of heat required for the phase change of the refrigerant to and from the surroundings. As a result, response time constant T may increase. Further, when the air conditioner includes a plurality of indoor heat exchangers 20 or when a plurality of outdoor heat exchangers 40 are installed in parallel, it takes longer time for the refrigerant to move through each heat exchanger through which no refrigerant circulates. As a result, response time constant T may increase.

Thus, in the air conditioner according to the fourth embodiment, controller 100 may perform a step response test to calculate parameters in the state in which the refrigerant circulates through all of indoor heat exchangers 20 and outdoor heat exchangers 40. In this way, controller 100 can determine optimal parameters by performing the step response test in the state in which response time constant T is kept as much as possible from becoming large, i.e., in the state close to the state in which the air conditioner is actually used.

Fifth Embodiment

An air conditioner according to the fifth embodiment will be hereinafter described. The following describes only portions of the air conditioner according to the fifth embodiment that are different from those in air conditioner 1 according to the first embodiment.

In the step response test, excessively small response gain K of the actuator may deteriorate the accuracy in calculation of the response gain. On the other hand, when response gain K of the actuator is excessively large, the value that changes according to response gain K of the actuator may deviate from the guaranteed operation range. Thus, an optimal range is included in the range of the value of response gain K to be calculated in the step response test.

In general, response gain K of the temperature or the pressure of the refrigeration cycle in the air conditioner follows not the absolute value of the amount of operation of the actuator but the ratio between the amount of operation before the step operation and the amount of operation after the step operation. Therefore, by normalizing the amount of operation of the actuator in the step response test, the controllability and the safety of the air conditioner are enhanced.

Thus, in the air conditioner according to the fifth embodiment, controller 100 changes the amount of operation of the actuator in the second control state so as to correspond to the change rate of the amount of operation of the actuator determined in the first control state. For example, in the example in Fig. 3, controller 100 changes the driving frequency of compressor 10 from 25 Hz to 30 Hz. In other words, assuming that the driving frequency is 25 Hz in the first control state of compressor 10, controller 100 increases the driving frequency of compressor 10 by 20%. Thus, assuming that the driving frequency is 10 Hz in the second control state of compressor 10, controller 100 increases the driving frequency of compressor 10 by 20% from 10 Hz to 12 Hz.

As described above, in the air conditioner according to the fifth embodiment, controller 100 may determine a reference control state of the actuator in advance, and change the amount of operation in each of other control states so as to correspond to the change rate of the amount of operation in this reference control state. Thereby, since controller 100 can suitably change the amount of operation of the actuator according to the control state of the actuator, the controllability and the safety of the air conditioner can be enhanced. Note that controller 100 may select a reference control state from among the plurality of control states used in the step response test performed in the past.

(Overview)

The present disclosure relates to an air conditioner 1. As shown in Figs. 1 and 2, air conditioner 1 includes a refrigerant circuit 4, a blower 45, and a controller 100. Refrigerant circuit 4 includes a compressor 10, an indoor heat exchanger 20, an expansion valve 30, and an outdoor heat exchanger 40, and is configured to circulate refrigerant. Blower 45 sends air to outdoor heat exchanger 40. Controller 100 controls at least one actuator that is one of compressor 10, expansion valve 30, and blower 45. One of indoor heat exchanger 20 and outdoor heat exchanger 40 functions as a condenser. Controller 100 calculates a parameter used for controlling the at least one actuator in a state in which a degree of subcooling of refrigerant having passed through the condenser is equal to or greater than a threshold value.

By the configuration as described above, air conditioner 1 calculates a parameter used for controlling at least one actuator that is one of compressor 10, expansion valve 30, and blower 45 in the state in which the degree of subcooling of the refrigerant having passed through the condenser is equal to or greater than the threshold value, and thereby, it can determine an optimal parameter in consideration of the degree of subcooling of the refrigerant having passed through the condenser.

As shown in Fig. 5, when the degree of subcooling of the refrigerant having passed through the condenser is equal to or greater than the threshold value (YES in S2), and after a first time period has elapsed in a state in which at least one value of a temperature (T1, T2) and a pressure (P1, P2) of the refrigerant in refrigerant circuit 4 is stable (YES in S3), controller 100 changes the amount of operation of the at least one actuator (S5). After a second time period has elapsed in a state in which the at least one value becomes stable again (YES in S6), controller 100 acquires a response gain responsive to a change in the amount of operation (S8). Controller 100 calculates a parameter from the response gain (S10).

By the configuration as described above, air conditioner 1 can acquire the response gain at the time when the amount of operation of the actuator is changed in the state in which the degree of subcooling of the refrigerant having passed through the condenser is equal to or greater than the threshold value and at least one value of the temperature (T1, T2) and the pressure (P1, P2) of the refrigerant in refrigerant circuit 4 is stable, and also, air conditioner 1 can calculate a parameter from the acquired response gain. Thereby, air conditioner 1 can determine an optimal parameter in consideration of the degree of subcooling of the refrigerant having passed through the condenser.

Controller 100 fixes an amount of operation of an actuator other than the at least one actuator among compressor 10, expansion valve 30, and blower 45 during an elapse of the first time period and during an elapse of the second time period.

By the configuration as described above, air conditioner 1 can perform a step response test for only the actuator as a target for the step operation, and thereby, the accuracy in calculation of the parameters can be improved.

As shown in Fig. 6, controller 100 calculates a parameter for each of a plurality of predetermined states including an outside air temperature and an indoor temperature.

By the configuration as described above, since air conditioner 1 can control the actuator using the parameters determined in accordance with the installation environment and the operating conditions of air conditioner 1, excellent target value following control can be implemented in various operation states of air conditioner 1.

The at least one actuator is compressor 10. Controller 100 increases a rotation speed of compressor 10 when the degree of subcooling of the refrigerant having passed through the condenser is equal to or greater than the threshold value and after the first time period has elapsed in a state in which at least one value of the temperature and the pressure of the refrigerant in refrigerant circuit 4 is stable.

By the configuration as described above, air conditioner 1 increases the rotation speed of compressor 10 so as to increase the degree of subcooling of the refrigerant having passed through the condenser in the step response test, and thereby, during the step response test, can prevent the parameter from becoming smaller due to the unintentional decrease in the degree of subcooling of the refrigerant having passed through the condenser.

In the air conditioner according to the second embodiment, the at least one actuator is blower 45. The controller decreases a rotation speed of blower 45 when the degree of subcooling of the refrigerant having passed through the condenser is equal to or greater than the threshold value and after the first time period has elapsed in a state in which at least one value of the temperature and the pressure of the refrigerant in refrigerant circuit 4 is stable.

By the configuration as described above, the air conditioner according to the second embodiment decreases the rotation speed of blower 45 so as to increase the degree of subcooling of the refrigerant having passed through the condenser in the step response test, and thereby, during the step response test, can prevent the parameter from becoming smaller due to the unintentional decrease in the degree of subcooling of the refrigerant having passed through the condenser.

In the air conditioner according to the third embodiment, the at least one actuator is expansion valve 30. Controller 100 decreases a degree of opening of expansion valve 30 when the degree of subcooling of the refrigerant having passed through the condenser is equal to or greater than the threshold value and after the first time period has elapsed in a state in which at least one value of the temperature and the pressure of the refrigerant in refrigerant circuit 4 is stable.

By the configuration as described above, the air conditioner according to the third embodiment decreases the degree of opening of expansion valve 30 so as to increase the degree of subcooling of the refrigerant having passed through the condenser in the step response test, and thereby, during the step response test, can prevent the parameter from becoming smaller due to the unintentional decrease in the degree of subcooling of the refrigerant having passed through the condenser.

In the air conditioner according to the fourth embodiment, refrigerant circuit 4 includes at least either a plurality of indoor heat exchangers 20 or a plurality of outdoor heat exchangers 40. Controller 100 calculates the parameter in a state in which the refrigerant circulates through all of indoor heat exchangers 20 and outdoor heat exchangers 40.

By the configuration as described above, the air conditioner according to the fourth embodiment can determine an optimal parameter by performing the step response test in the state in which response time constant T is kept as much as possible from becoming large, i.e., in the state close to the state in which the air conditioner is actually used.

In the air conditioner according to the fifth embodiment, controller 100 changes the amount of operation of the at least one actuator in a second control state so as to correspond to a change rate of the amount of operation of the at least one actuator determined in a first control state.

By the configuration as described above, since the air conditioner according to the fifth embodiment can suitably change the amount of operation of the actuator according to the control state of the actuator, the controllability and the safety of the air conditioner can be enhanced.

It should be understood that the embodiments disclosed herein are illustrative and non-restrictive in every respect. The scope of the present disclosure is defined by the terms of the claims, rather than the description of the embodiments provided above, and is intended to include any modifications within the meaning and scope equivalent to the terms of the claims.

REFERENCE SIGNS LIST

1 air conditioner, 2 outdoor unit, 3 indoor unit, 4 refrigerant circuit, 10 compressor, 11 suction port, 12 discharge port, 20 indoor heat exchanger, 21, 41 fan, 22, 42 motor, 25, 45 blower, 30 expansion valve, 40 outdoor heat exchanger, 50 four-way valve, 51, 52, 53, 54, 111, 112, 121, 122 connection port, 61, 62, 63, 64 temperature sensor, 71, 72 pressure sensor, 81, 82, 84, 85, 87, 88, 89, 90 pipe, 83, 86 extension pipe, 100 controller, 101 processor, 102 storage device.

**Claims**

1. An air conditioner comprising:

   a refrigerant circuit comprising a compressor, an indoor heat exchanger, an expansion valve, and an outdoor heat exchanger, the refrigerant circuit being configured to circulate refrigerant;
   a blower configured to send air to the outdoor heat exchanger; and
   a controller configured to control at least one actuator that is one of the compressor, the expansion valve, and the blower, wherein
   one of the indoor heat exchanger and the outdoor heat exchanger is configured to function as a condenser, and
   the controller is configured to calculate a parameter used for controlling the at least one actuator in a state in which a degree of subcooling of refrigerant having passed through the condenser is equal to or greater than a threshold value.

2. The air conditioner according to claim 1, wherein

   the parameter is a parameter used for controlling an amount of operation of the at least one actuator by proportional-integral-differential (PID) control or proportional-integral (PI) control, and
   the controller is configured to

      change the amount of operation of the at least one actuator when the degree of subcooling of the refrigerant having passed through the condenser is equal to or greater than the threshold value and after a first time period has elapsed in a state in which at least one value of a temperature and a pressure of the refrigerant in the refrigerant circuit is stable,

acquire a response gain responsive to a change in the amount of operation after a second time period has elapsed in a state in which the at least one value becomes stable again, and

calculate the parameter from the response gain.

3. The air conditioner according to claim 2, wherein the controller is configured to fix an amount of operation of an actuator other than the at least one actuator among the compressor, the expansion valve, and the blower during an elapse of the first time period and during an elapse of the second time period.

4. The air conditioner according to claim 1, wherein the controller is configured to calculate the parameter for each of a plurality of predetermined states including an outside air temperature and an indoor temperature.

5. The air conditioner according to claim 2, wherein

the at least one actuator is the compressor, and
the controller is configured to increase a rotation speed of the compressor when the degree of subcooling of the refrigerant having passed through the condenser is equal to or greater than the threshold value and after the first time period has elapsed in a state in which at least one value of the temperature and the pressure of the refrigerant in the refrigerant circuit is stable.

6. The air conditioner according to claim 2, wherein

the at least one actuator is the blower, and
the controller is configured to decrease a rotation speed of the blower when the degree of subcooling of the refrigerant having passed through the condenser is equal to or greater than the threshold value and after the first time period has elapsed in a state in which at least one value of the temperature and the pressure of the refrigerant in the refrigerant circuit is stable.

7. The air conditioner according to claim 2, wherein

the at least one actuator is the expansion valve, and
the controller is configured to decrease a degree of opening of the expansion valve when the degree of subcooling of the refrigerant having passed through the condenser is equal to or greater than the threshold value and after the first time period has elapsed in a state in which at least one value of the temperature and the pressure of the refrigerant in the refrigerant circuit is stable.

8. The air conditioner according to claim 1, wherein

the refrigerant circuit comprises at least either a plurality of the indoor heat exchangers or a plurality of the outdoor heat exchangers, and
the controller is configured to calculate the parameter in a state in which the refrigerant flows through all of the indoor heat exchangers and the outdoor heat exchangers.

9. The air conditioner according to claim 2, wherein the controller is configured to change the amount of operation of the at least one actuator in a second control state so as to correspond to a change rate of the amount of operation of the at least one actuator determined in a first control state.

# FIG.1

FIG.2

EP 4 350 241 A1

FIG.3

COMPRESSOR FREQUENCY [Hz]

Time [sec]

FIG.4

DISCHARGE
TEMPERATURE
T2
[°C]

0.632K

K=2.0[°C/Hz]

T=42[sec]

Time [sec]

FIG.5

```
                    ┌──────────┐
                    │  START   │
                    └────┬─────┘
                         │
                    ◇ IS          ╲  S1
                 ◇ ACTUATOR IN     ◇───── NO ──────────┐
                    ◇ OPERATION ? ╱                     │
                         │ YES                          │
                         │                              │
                  ◇ IS                 ╲ S2             │
               ◇ DEGREE OF              ◇              │
         ◇ SUBCOOLING OF CONDENSER       ◇── NO ──────▶│
          ◇ EQUAL TO OR GREATER THAN    ◇              │
               ◇ THRESHOLD              ╱               │
                  ◇ VALUE ?                             │
                         │ YES                          │
                         │                              │
                  ◇ HAS            ╲ S3                 │
            ◇ FIRST TIME            ◇                   │
        ◇ PERIOD ELAPSED IN STATE IN ◇── NO ──────────▶│
         ◇ WHICH T1, T2 OR/AND P1, P2 ◇                │
              ◇ ARE STABLE ?          ╱                 │
                         │ YES                          │
                         │      S4                      │
           ┌─────────────────────────────────┐         │
           │ STORE VALUE(S) OF T2 OR/AND P2   │         │
           └─────────────────────────────────┘         │
                         │      S5                      │
           ┌─────────────────────────────────┐         │
           │ CHANGE AMOUNT OF OPERATION OF    │         │
           │ ACTUATOR                         │         │
           └─────────────────────────────────┘         │
                         │                              │
                ┌────────│◀──────────┐                  │
                │        │           │                  │
                │  ◇ HAS        ╲ S6 │                  │
                │ ◇ SECOND TIME  ◇   │                  │
          NO ───◇ PERIOD ELAPSED IN STATE IN ◇          │
                │ ◇ WHICH T1, T2 OR/AND P1, P2 ◇        │
                │   ◇ ARE STABLE ?  ╱                   │
                │        │ YES                          │
                │        │     S7                       │
           ┌─────────────────────────────────┐         │
           │ STORE VALUE(S) OF T2 OR/AND P2   │         │
           └─────────────────────────────────┘         │
                         │     S8                       │
           ┌─────────────────────────────────┐         │
           │ ACQUIRE RESPONSE GAIN           │          │
           └─────────────────────────────────┘         │
                         │     S9                       │
           ┌─────────────────────────────────┐         │
           │ ACQUIRE RESPONSE TIME CONSTANT  │          │
           └─────────────────────────────────┘         │
                         │     S10                      │
           ┌─────────────────────────────────┐         │
           │ CALCULATE PARAMETER             │          │
           └─────────────────────────────────┘         │
                         │     S11                      │
           ┌─────────────────────────────────┐         │
           │ STORE PARAMETER                 │          │
           └─────────────────────────────────┘         │
                         │◀─────────────────────────────┘
                    ┌─────────┐
                    │   END   │
                    └─────────┘
```

FIG.6

| | | INDOOR TEMPERATURE | | |
|---|---|---|---|---|
| | | LOWER THAN 20℃ | EQUAL TO OR HIGHER THAN 20℃ AND LOWER THAN 30℃ | EQUAL TO OR HIGHER THAN 30℃ |
| OUTSIDE AIR TEMPERATURE | EQUAL TO OR HIGHER THAN 30℃ | (Kp7,Ki7,Kd7) | (Kp8,Ki8,Kd8) | (Kp9,Ki9,Kd9) |
| | EQUAL TO OR HIGHER THAN 20℃ AND LOWER THAN 30℃ | (Kp4,Ki4,Kd4) | (Kp5,Ki5,Kd5) | (Kp6,Ki6,Kd6) |
| | LOWER THAN 20℃ | (Kp1,Ki1,Kd1) | (Kp2,Ki2,Kd2) | (Kp3,Ki3,Kd3) |

## INTERNATIONAL SEARCH REPORT

| | International application No. |
|---|---|
| | PCT/JP2021/019640 |

A.    CLASSIFICATION OF SUBJECT MATTER
F24F 11/86(2018.01)i; F24F 11/871(2018.01)i; F24F 140/00(2018.01)n
FI: F24F11/86; F24F11/871; F24F140:00

According to International Patent Classification (IPC) or to both national classification and IPC

B.    FIELDS SEARCHED

Minimum documentation searched (classification system followed by classification symbols)
F24F11/86; F24F11/871; F24F140/00

Documentation searched other than minimum documentation to the extent that such documents are included in the fields searched
        Published examined utility model applications of Japan            1922-1996
        Published unexamined utility model applications of Japan           1971-2021
        Registered utility model specifications of Japan                   1996-2021
        Published registered utility model applications of Japan           1994-2021

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| X | JP 2010-007996 A (DAIKIN IND LTD) 14 January 2010 | 1, 4 |
| Y | (2010-01-14) paragraphs [0021]-[0112], fig. 1-13 | 2-3, 5-9 |
| Y | JP 2007-040567 A (DAIKIN IND LTD) 15 February 2007 | 2-3, 5-7, 9 |
| A | (2007-02-15) paragraphs [0016]-[0040], fig. 1-3 | 4, 8 |
| Y | JP 2019-032150 A (DAIKIN IND LTD) 28 February 2019 | 8 |
| A | (2019-02-28) paragraphs [0021]-[0112], fig. 1, 9 | 9 |

☐  Further documents are listed in the continuation of Box C.        ☒  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 09 July 2021 (09.07.2021) | 20 July 2021 (20.07.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2021/019640

| Patent Documents referred in the Report | Publication Date | Patent Family | Publication Date |
|---|---|---|---|
| JP 2010-007996 A | 14 Jan. 2010 | (Family: none) | |
| JP 2007-040567 A | 15 Feb. 2007 | (Family: none) | |
| JP 2019-032150 A | 28 Feb. 2019 | EP 3633290 A1 paragraphs [0012]-[0124], fig. 1, 9 CN 110691950 A | |

Form PCT/ISA/210 (patent family annex) (January 2015)

**EP 4 350 241 A1**

**REFERENCES CITED IN THE DESCRIPTION**

**Patent documents cited in the description**

- JP 2011220610 A